# EUROPÄISCHE PATENTSCHRIFT

(11) **EP 2 988 986 B1**
(45) Veröffentlichungstag und Bekanntmachung des Hinweises auf die Patenterteilung: **28.11.2018**
(21) Anmeldenummer: 14712682.5
(22) Anmeldetag: 27.03.2014
(51) Int. Cl.: B62J 7/04, B62J 9/00

(54) **TOPCASE MIT DOPPELTEM DECKEL**
TOP CASE HAVING A DOUBLE LID
TOPCASE À DOUBLE COUVERCLE

(30) Priorität: 22.04.2013 DE 102013207190
(43) Veröffentlichungstag der Anmeldung: 02.03.2016
(73) Patentinhaber: Bayerische Motoren Werke Aktiengesellschaft, 80809 München (DE)
(72) Erfinder: RÖSNER, Mathias, 80634 München (DE); DANZER, Kaspar, 80999 München (DE); HARMS, Thomas, 85049 Ingolstadt (DE)
(86) Internationale Anmeldenummer: PCT/EP2014/056114
(87) Internationale Veröffentlichungsnummer: WO 2014/173610

(56) Entgegenhaltungen:
- EP-A1- 2 316 717
- WO-A1-02/34613
- DE-U1- 20 010 581
- JP-A- 2000 225 978
- US-A- 5 083 632
- US-B1- 7 008 012

## Beschreibung

Die Erfindung betrifft ein Topcase für ein Fahrzeug, insbesondere ein Topcase für ein Motorrad oder ein motorradähnliches Kraftfahrzeug, gemäß dem Oberbegriff des Patentanspruchs 1 sowie ein mit einem solchen Topcase ausgerüstetes Fahrzeug gemäß Patentanspruch 15.

Ein sogenanntes "Topcase" stellt einen aufsetzbaren Gepäckbehälter dar, der beispielsweise im Heckbereich eines Motorrades zum Transport von Gegenständen angeordnet werden kann. Dieser Behälter wird in der Regel durch eine Unterschale gebildet, die mit einem Deckel verschließbar ist und einen definierten Innenraum zur Unterbringung von Gepäckstücken oder anderen zu transportierenden Gegenständen aufweist. Das Topcase wird auf einem fest mit dem Motorrad verbundenen Gepäckträger lösbar befestigt und kann aufgrund des begrenzten Innenraums im Falle eines zusätzlichen Stauraumbedarfs beispielsweise durch seitlich an dem Motorrad montierbare separate Koffer oder Taschen ergänzt werden. Entsprechende Anordnungen sind unter anderem auch für motorradähnliche Fahrzeuge und Fahrräder bekannt.

So zeigt die US 7,008,012 B1 ein abnehmbares Staufach für ein Zweirad. Auch die WO 02/34613 A1, US 5,083,632 A und EP 2 316 717 A1 zeigen verschiedene Transportbehältnisse für Motorräder oder Quads.

Aufgabe der Erfindung ist es daher, ein Topcase mit einem möglichst großen Stauvolumen und einer dennoch kompakten Handhabbarkeit bereitzustellen.

Diese Aufgabe wird gelöst durch ein Topcase mit den Merkmalen des Patentanspruchs 1 sowie einem Fahrzeug mit einem entsprechenden Topcase gemäß Patentanspruch 16. Vorteilhafte Ausführungsformen ergeben sich aus den jeweils abhängigen Patentansprüchen.

Demnach wird ein Topcase für ein Fahrzeug, insbesondere für ein Motorrad oder ein motorradähnliches Fahrzeug, vorgeschlagen, mit einer Unterschale und einer zum Öffnen des Topcase schwenkbar zu der Unterschale angeordneten Oberschale, wobei die Unterschale und die Oberschale in geschlossener Stellung einen gemeinsamen Innenraum zum Aufbewahren von Gegenständen definieren. Die Oberschale umfasst eine Innenschale und eine die Innenschale umgreifende Außenschale, wobei die Außenschale unabhängig von der Innenschale in eine erste geöffnete Stellung verschwenkbar ausgestaltet ist. Außerdem ist die Außenschale um eine erste Schwenkachse schwenkbar mit der Unterschale verbunden. Zusätzlich ist ebenfalls die Innenschale um die erste Schwenkachse schwenkbar mit der Unterschale verbunden.

Es wird also ein Topcase beschrieben, das durch seine Unterschale und Oberschale einen Innenraum, also ein Innenraumvolumen, definiert. Darüber hinaus ist die Oberschale zweischalig aufgebaut, wobei jedoch die entsprechende Außenschale getrennt von der Innenschale in die erste geöffnete Stellung, also in die geöffnete Stellung der Außenschale, geschwenkt werden kann.

Aufgrund der unabhängigen Verschwenkbarkeit kann folglich auch die Innenschale unabhängig von der Außenschale bewegt werden. Je nach geometrischer Ausgestaltung des Topcase kann es gegebenenfalls möglich sein, dass die Innenschale nur in dem Umfang bewegbar ist, welchen die Außenschale aufgrund ihres aktuellen Öffnungsgrades zulässt.

Vorzugsweise weist die Außenschale eine Kavität auf, die in der ersten geöffneten Stellung der Außenschale zur Aufnahme von Gegenständen ausgebildet ist. Wird also die Außenschale in die erste geöffnete Stellung bewegt, so können in die Kavität Gegenstände hineingelegt und somit transportiert werden. In diesem Fall ermöglicht die unabhängige Bewegbarkeit der Innenschale gegenüber der Außenschale, dass der Innenraum des Topcase trotz der Position und Nutzung der Außenschale unabhängig von dieser durch entsprechendes Bewegen der Innenschale geöffnet oder verschlossen werden kann.

Mit anderen Worten steht mit Hilfe des getrennten Aufklappens der Außenschale zusätzlich zu dem von der Innenschale und der Unterschale gebildeten Innenraums das Stauvolumen der Kavität der Außenschale zur Verfügung. Auf diese Weise wird ein Stauvolumen des Topcase bei Bedarf durch Bereitstellung von zusätzlichem Stauraum deutlich erhöht, so dass das Topcase besonders variabel handhabbar ist. Besteht dagegen kein Bedarf an zusätzlichem Stauraum kann das Topcase durch Schließen der Außenschale und Innenschale analog zu einem bekannten Topcase genutzt werden.

Wie beschrieben, ist die Außenschale um eine erste Schwenkachse schwenkbar mit der Unterschale verbunden.

Gemäß einer bevorzugten Ausführungsform ist die Außenschale zum Verschwenken in die erste geöffnete Stellung um mindestens ca. 90°, insbesondere ca. 180°, gegenüber der geschlossenen Stellung schwenkbar. Die Außenschale kann somit vollständig aufgeklappt und je nach Ausgestaltung des Fahrzeugs gegebenenfalls mit einer äußeren Oberfläche auf diesem abgelegt werden. Ist das Topcase also beispielsweise hinter der Sitzbank eines Motorrades oder eines anderen motorradähnlichen Fahrzeugs angeordnet, so kann die Außenschale in Fahrtrichtung des Motorrades geöffnet und auf der Sitzbank, insbesondere einer möglicherweise vorhandenen Sitzbank des Beifahrers, abgelegt werden.

Wie beschrieben ist die Innenschale ebenfalls um die erste Schwenkachse schwenkbar mit der Unterschale verbunden. Dies bedeutet, dass sowohl die Außenschale als auch die Innenschale um dieselbe Schwenkachse geschwenkt werden können.

Die Schwenkachsen können in beiden Fällen beispielsweise durch ein oder mehrere eingelenkige Scharniere bereitgestellt werden, die jeweils mit der entsprechenden Außenschale bzw. Innenschale einerseits und der Unterschale andererseits verbunden sind. Selbstverständlich können auch mehrgelenkige Gelenkanordnungen eingesetzt werden.

Gemäß einer weiteren Ausführungsformumfassen die Außenschale und die Innenschale vorzugsweise jeweils mindestens eine eigene Gelenkanordnung zur Bereitstellung der ersten Schwenkachse. Außerdem kann das Topcase derart ausgestaltet sein, dass beispielsweise die Innenschale in einer zweiten geöffneten Stellung um mindestens 90°, insbesondere um ca. 180°, gegenüber der geschlossenen Stellung schwenkbar ist.

Entsprechend einer weiteren Ausführungsform ist die Innenschale lösbar mit der Außenschale zum gemeinsamen Verschwenken der Innenschale und der Außenschale verbindbar. Dies bedeutet, dass im verbundenen Zustand die Außenschale und die Innenschale derart miteinander gekoppelt sind, dass beide Schalen nur gemeinsam bewegt werden können. Im Falle dieser Ausführungsform ist jeweils eine ein- oder mehrgelenkige Gelenkanordnung für die Innenschale bzw. die Außenschale vorzusehen, die eine gemeinsame Schwenkachse und somit die gemeinsame Bewegung beider Schalen ermöglicht.

So kann beispielsweise die Außenschale mittels eingelenkiger Scharniere als Gelenkanordnungen mit der Unterschale verbunden sein. Gleiches gilt für die Innenschale. Alternativ dazu ist es möglich, in diesem Fall für die Innenschale Mehrgelenke vorzusehen, so dass die Innenschale ebenfalls um die gemeinsame Schwenkachse verschwenkbar ist.

Beispielsweise kann die lösbare Verbindung zwischen Außenschale und Innenschale mittels einer lösbaren kraftschlüssigen und/oder formschlüssigen Verbindungsanordnung, insbesondere einer Rastverbindung oder einer Magnetverbindung, bereitgestellt sein. Es ist also eine wahlweise Verbindung vorgesehen, die von einem Nutzer bei Bedarf hergestellt oder wieder gelöst werden kann, um die beiden Schalen gemeinsam oder getrennt voneinander zu bewegen.

Wie bereits angedeutet, kann das Topcase derart ausgebildet sein, dass die aufgeklappte Außenschale in einem auf dem Fahrzeug montierten Zustand auf dem Fahrzeug abgelegt werden kann und/oder zumindest mit diesem über geeignete Verbindungsmittel verbindbar ist, um die Außenschale abzustützen und/oder zu sichern. Kann die Außenschale nicht abgelegt oder abgestützt werden, so muss eine Eigensteifigkeit und Festigkeit entsprechend ausgelegt sein, so dass eine Beladung der Kavität der Außenschale dennoch ermöglicht ist. Gegebenenfalls ist eine Tragfähigkeit in diesem Fall jedoch geringer als in einem abgestützten bzw. verbundenen Zustand.

Des Weiteren können die Innenschale und/oder die Außenschale mittels eines verriegelbaren Schlosses mit der Unterschale verbindbar sein. Es besteht somit die Möglichkeit den Innenraum des Topcase gegen unbefugten Zugriff zu schützen. Vorzugsweise sind hierzu die Innenschale und die Unterschale miteinander absperrbar ausgebildet, so dass auch in einem geöffneten Zustand der Außenschale ein Absperren des Innenraums möglich ist.

Selbstverständlich kann jedoch lediglich ein Schloss an der Außenschale vorgesehen sein, welches den Innenraum des Topcase sperrt, wenn die Außenschale ebenfalls geschlossen ist.

Alternativ umfasst das Topcase mindestens zwei Schlösser, wobei die Innenschale und die Außenschale durch jeweils ein eigenes Schloss getrennt voneinander mit der Unterschale abgesperrt werden können.

Des Weiteren ist es möglich, dass die Innenschale und/oder die Außenschale in der geschlossenen Stellung mittels einer Dichtanordnung mit der Unterschale zum Abdichten des Innenraums verbunden sind. Auf diese Weise wird der Innenraum des Topcase gegen ein Eindringen von Verschmutzungen und Nässe geschützt.

Vorzugsweise umfasst die Außenschale eine integrierte Haltevorrichtung zum Befestigen von Gegenständen in der Außenschale. Die Haltevorrichtung ist dazu ausgebildet, dass die in der Außenschale angeordneten Gegenstände insbesondere während der Fahrt des Fahrzeugs in der Außenschale verbleiben und dort gesichert sind. Als Haltevorrichtung können beispielsweise Spanngurte, Netze, Körbe oder Taschen, insbesondere faltbare Taschen, oder andere geeignete Vorrichtungen, optional auch jeweils in einer in der Außenschale integrierten Ausführungsform, vorgesehen sein.

Des Weiteren können die Innenschale und/oder die Außenschale jeweils ein- oder mehrwandig aufgebaut sein. Ein mehrwandiger Aufbau einer oder beider Schalen ermöglicht eine entsprechende Erhöhung der Festigkeit und Steifigkeit des Topcase sowie eine verbesserte Abschirmung des Innenraums gegen eindringenden Schmutz oder Nässe.

Gemäß einer weiteren Ausführungsform kann das Topcase derart ausgestaltet sein, dass zumindest die Außenschale lösbar mit der Unterschale und/oder der Innenschale verbunden ist. Insbesondere kann hierzu die zugehörige Gelenkanordnung, welche die Außenschale mit der Unterschale und/oder mit der Innenschale schwenkbar verbindet, entkoppelbar oder teilbar ausgeführt sein. Beispielsweise kann eine zugehörige Gelenkachse entfernt oder die Gelenkanordnung an einer der Komponenten gelöst werden. In jedem Fall ist die Außenschale somit von den restlichen Komponenten des Topcase trennbar, so dass das Topcase ohne die Außenschale als gewöhnliches Topcase benutzbar bleibt. Die Außenschale ist also wahlweise abkoppelbar und muss daher nicht permanent mitgeführt werden. Beispielsweise kann die Außenschale somit als eigenständiges Transportbehältnis, zum Beispiel als Einkaufskorb, genutzt werden. Anschließend wird die Außenschale wieder angekoppelt und kann in der beschriebenen Weise genutzt werden.

Des Weiteren wird ein Fahrzeug mit dem beschriebenen Topcase bereitgestellt. Als Fahrzeuge sind alle zur Aufnahme eines Topcase geeigneten Fahrzeuge zu verstehen. Insbesondere zwei-, drei- oder vierrädrige "offene" Fahrzeuge, wie Motorräder oder motorradähnliche Fahrzeuge, also Motorroller, Quads, sogenannte Scooter, aber auch Fahrräder, sind hierzu geeignet.

Die Erfindung wird nachfolgend unter Bezugnahme auf die Figuren anhand eines Ausführungsbeispiels näher erläutert. Es zeigen:
Fig. 1 ein auf einem Gepäckträger montiertes Topcase in perspektivischer und seitlicher Ansicht in geschlossenem Zustand,
Fig. 2 das Topcase aus Fig. 1 mit geschlossener Innenschale und aufgeklappter Außenschale in einem ersten geöffneten Zustand,
Fig. 3 das Topcase aus Fig. 1 und 2 mit geschlossener Innenschale und weiter aufgeklappter Außenschale in einem zweiten geöffneten Zustand,
Fig. 4 das Topcase aus den Fig. 1 bis 3 mit geschlossener Innenschale und vollständig aufgeklappter Außenschale in einem dritten geöffneten Zustand,
Fig. 5 das Topcase aus Fig. 4 mit vollständig aufgeklappter Außenschale und teilweise geöffneter Innenschale in einem vierten geöffneten Zustand, und
Fig. 6 das Topcase aus Fig. 1 mit gemeinsam aufgeklappter Innenschale und Außenschale in einem fünften geöffneten Zustand.

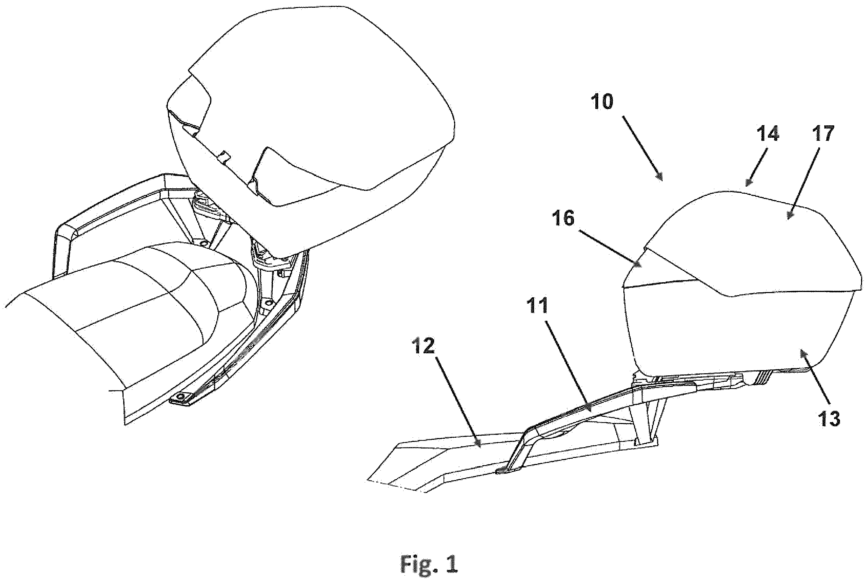

Die Fig. 1 zeigt ein auf einem Gepäckträger 11 montiertes Topcase 10 in geschlossenem Zustand in einer perspektivischen Ansicht und einer seitlichen Ansicht. Der Gepäckträger 11 ist beispielsweise mit einem Motorrad oder einem motorradähnlichen Fahrzeug verbunden (nicht dargestellt) und hinter dessen Sitzbank 12, insbesondere hinter einem Sitz eines Beifahrers, montiert.

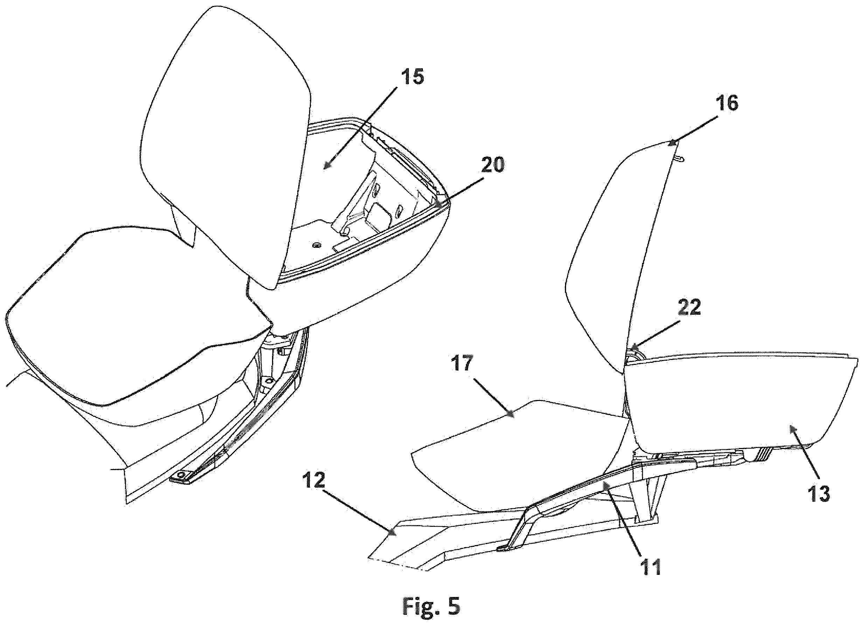

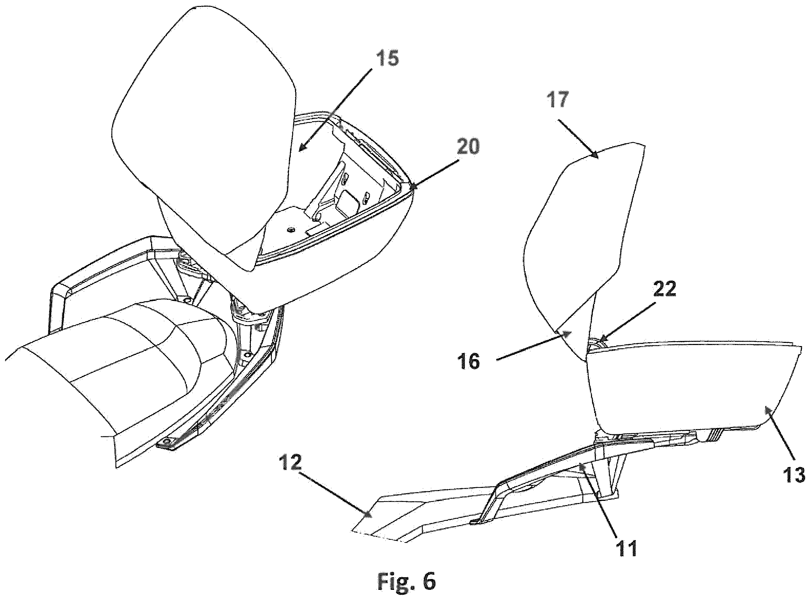

Das Topcase 10 umfasst eine Unterschale 13 und eine zum Öffnen des Topcase 10 schwenkbar zu der Unterschale 13 angeordnete Oberschale 14, wobei die Unterschale 13 und die Oberschale 14 in geschlossener Stellung einen gemeinsamen Innenraum 15 zum Aufbewahren von Gegenständen definieren (vgl. beispielsweise Fig. 5 und 6), wobei die Oberschale 14 eine Innenschale 16 und eine die Innenschale 16 umgreifende Außenschale 17 umfasst.

Die Außenschale 17 ist derart ausgestaltet, dass diese unabhängig von der Innenschale 16 in eine geöffnete Stellung geschwenkt werden kann, indem die Außenschale 17 um eine erste Schwenkachse 18 schwenkbar mit der Unterschale 13 verbunden ist.

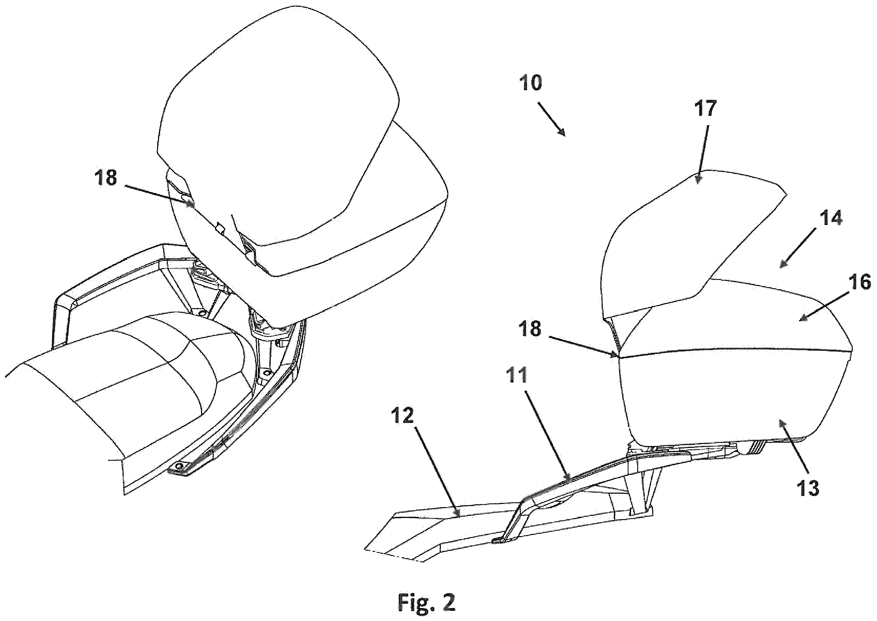

Eine erste geöffnete Stellung ist in Fig. 2 gezeigt, in der das Topcase 10 mit geschlossener Innenschale 16 und einer teilweise aufgeklappten Außenschale 17 dargestellt ist.

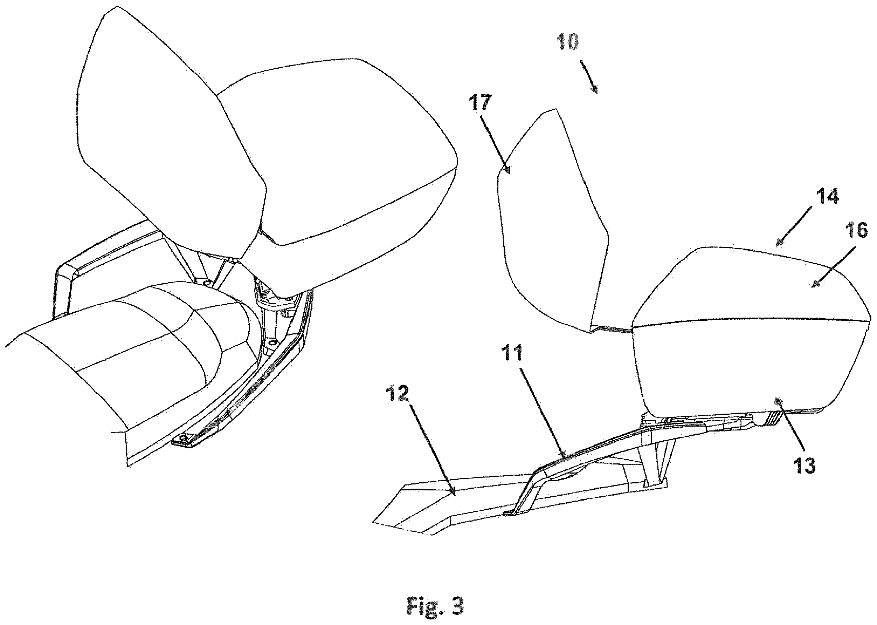

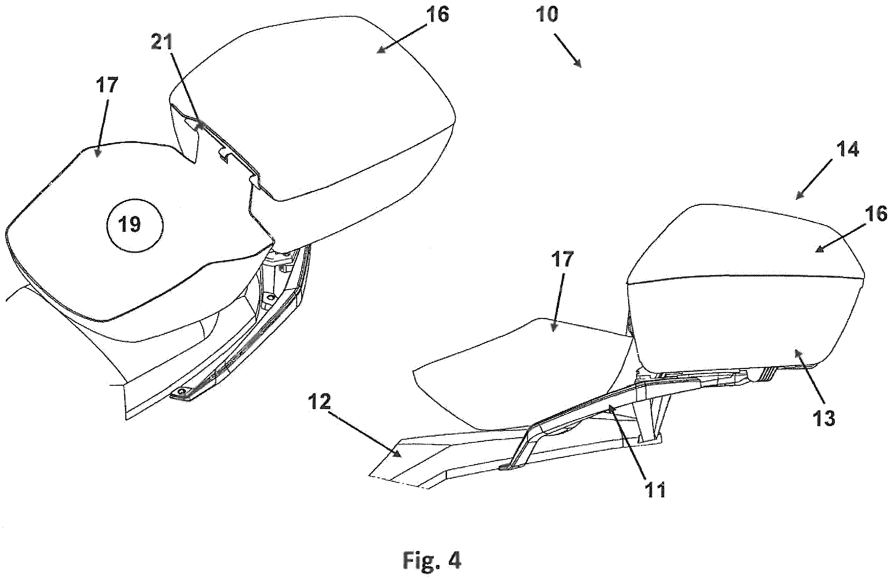

Auch die Fig. 3 und 4 zeigen das Topcase 10 mit geschlossener Innenschale 16 und weiter aufgeklappter Außenschale 17 in einem zweiten geöffneten Zustand in Fig. 3 bzw. vollständig aufgeklappter Außenschale 17 in einem dritten geöffneten Zustand in Fig. 4.

Hierzu ist die Außenschale 17 zum Verschwenken in die vollständig geöffnete Stellung um ca. 180° gegenüber der geschlossenen Stellung schwenkbar ausgebildet. Auf diese Weise kann die Außenschale 17 in Fahrtrichtung des Motorrades geöffnet und auf der Sitzbank abgelegt werden. Selbstverständlich kann in diesem Fall je nach geometrischer Ausgestaltung ein größerer oder kleinerer Winkelbetrag erforderlich sein, um die Außenschale 17 auf dem Fahrzeug abzulegen. Wie außerdem in Fig. 4 dargestellt ist, umfasst die Außenschale 17 eine Kavität 19, die in einem ersten geöffneten Zustand der Außenschale 17 zur Aufnahme von Gegenständen (nicht dargestellt) ausgebildet ist.

Lediglich optional und in der abgebildeten Ausführungsform nicht dargestellt, kann die Außenschale 17 eine integrierte Haltevorrichtung zum Befestigen von Gegenständen in der Außenschale 17 bzw. deren Kavität 19 umfassen.

In Fig. 5 ist das Topcase 10 mit vollständig aufgeklappter Außenschale 17 und teilweise geöffneter Innenschale 16 in einem vierten geöffneten Zustand dargestellt. Es ist erkennbar, dass die Innenschale 16 ebenfalls um die erste Schwenkachse 18 schwenkbar mit der Unterschale 13 verbunden ist. Die Innenschale 16 ist somit in die dargestellte geöffnete Stellung um ca. 90° gegenüber der geschlossenen Stellung aus Fig. 1 bis 4 verschwenkt.

Fig. 6 zeigt das Topcase aus Fig. 1 mit gemeinsam aufgeklappter Innenschale 16 und Außenschale 17 in einem fünften geöffneten Zustand. Hierzu kann die Innenschale 16 beispielsweise lösbar mit der Außenschale 17 zum gemeinsamen Verschwenken verbindbar ausgebildet sein.

Wie aus den Fig. 5 und 6 erkennbar ist, können die Innenschale 16 und die Außenschale 17 mittels einer Dichtanordnung 20 mit der Unterschale zum Abdichten des Innenraums 19 in der geschlossenen Stellung (vgl. Fig. 1) verbunden werden.

Gemäß der dargestellten Ausführungsform weisen die Außenschale 17 und die Innenschale 16 jeweils eine eigene Gelenkanordnung 21,22 zur Bereitstellung der ersten Schwenkachse auf. Die Außenschale 17 ist hierzu mit der in Fig. 4 dargestellten Gelenkanordnung 21 gelenkig und schwenkbar mit der Unterschale 13 verbunden. Die Innenschale 16 weist eine eigene Gelenkanordnung 22 auf, die in Fig. 5 und 6 angedeutet ist.

## Patentansprüche

1. Topcase für ein Fahrzeug, insbesondere für ein Motorrad oder ein motorradähnliches Fahrzeug, mit einer Unterschale (13) und einer zum Öffnen des Topcase (10) schwenkbar zu der Unterschale (13) angeordneten Oberschale (14), wobei die Unterschale (13) und die Oberschale (14) in geschlossener Stellung einen gemeinsamen Innenraum (15) zum Aufbewahren von Gegenständen definieren, wobei die Oberschale (14) eine Innenschale (16) und eine die Innenschale (16) umgreifende Außenschale (17) umfasst, wobei die Außenschale (17) unabhängig von der Innenschale (16) in eine erste geöffnete Stellung verschwenkbar ausgestaltet ist,
**dadurch gekennzeichnet, dass** die Außenschale (17) um eine erste Schwenkachse (18) schwenkbar mit der Unterschale (13) verbunden ist und die Innenschale (16) ebenfalls um die erste Schwenkachse (18) schwenkbar mit der Unterschale (13) verbunden ist.

2. Topcase nach Anspruch 1, **dadurch gekennzeichnet, dass** die Außenschale (17) eine Kavität (19) aufweist, die in einem ersten geöffneten Zustand der Außenschale (17) zur Aufnahme von Gegenständen ausgebildet ist.

3. Topcase nach einem der Ansprüche 1 bis 2, **dadurch gekennzeichnet, dass** die Außenschale (17) zum Verschwenken in die erste geöffnete Stellung um mindestens 90°, insbesondere etwa 180°, gegenüber der geschlossenen Stellung schwenkbar ist.

4. Topcase nach einem der Ansprüche 1 bis 3, **dadurch gekennzeichnet, dass** die Innenschale (16) in einer zweiten geöffneten Stellung um mindestens 90°, insbesondere um 180°, gegenüber der geschlossenen Stellung schwenkbar ist.

5. Topcase nach einem der Ansprüche 1 bis 4, **dadurch gekennzeichnet, dass** die Innenschale (16) lösbar mit der Außenschale (17) zum gemeinsamen Verschwenken der Innenschale (16) und der Außenschale (17) verbindbar ist.

6. Topcase nach Anspruch 5, **dadurch gekennzeichnet, dass** die lösbare Verbindung zwischen Außenschale (17) und Innenschale (16) eine lösbare kraftschlüssige und/oder formschlüssige Verbindungsanordnung umfasst, insbesondere eine Rastverbindung oder einer Magnetverbindung.

7. Topcase nach einem der Ansprüche 1 bis 6, **dadurch gekennzeichnet, dass** die Innenschale (16) und/oder die Außenschale (17) mittels eines verriegelbaren Schlosses mit der Unterschale (13) verbindbar sind.

8. Topcase nach einem der Ansprüche 1 bis 7, **dadurch gekennzeichnet, dass** die Innenschale (16) und/oder die Außenschale (17) in der geschlossenen Stellung mittels einer Dichtanordnung (20) mit der Unterschale (13) zum Abdichten des Innenraums (15) verbunden sind.

9. Topcase nach einem der Ansprüche 1 bis 8, **dadurch gekennzeichnet, dass** die Außenschale (17) und die Innenschale (16) jeweils eine eigene Gelenkanordnung (22) zur Bereitstellung der ersten Schwenkachse umfassen.

10. Topcase nach einem der Ansprüche 1 bis 9, **dadurch gekennzeichnet, dass** die Außenschale (17) eine Haltevorrichtung, insbesondere eine integrierte Haltevorrichtung, zum Befestigen von Gegenständen in der Außenschale (17) umfasst.

11. Topcase nach einem der Ansprüche 1 bis 10, **dadurch gekennzeichnet, dass** die Innenschale (16) und/oder die Außenschale (17) jeweils ein- oder mehrwandig aufgebaut sind.

12. Topcase nach einem der Ansprüche 1 bis 11, **dadurch gekennzeichnet, dass** zumindest die Außenschale (17) lösbar mit der Unterschale und/oder der Innenschale (16) verbunden ist.

13. Fahrzeug mit einem Topcase, **dadurch gekennzeichnet, dass** das Topcase (10) nach einem der Ansprüche 1 bis 12 ausgestaltet ist.

## Claims

1. A top case for a vehicle, especially for a motorcycle or a vehicle similar to a motorcycle, having a lower shell (13) and an upper shell (14) which for opening the top case (10) is arranged to be pivotable relative to the lower shell (13), wherein the lower shell (13) and the upper shell (14) in the closed position define a common interior (15) for storing articles, wherein the upper shell (14) comprises an inner shell (16) and an outer shell (17) encompassing the inner shell (16), wherein the outer shell (17) is designed to be pivotable into a first opened position independently of the inner shell (16),
**characterised in that** the outer shell (17) is connected to the lower shell (13) pivotably about a first pivot axis (18) and the inner shell (16) is likewise connected to the lower shell (13) pivotably about the first pivot axis (18).

2. A top case according to Claim 1, **characterised in that** the outer shell (17) has a cavity (19) which in a first opened state of the outer shell (17) is designed for accommodating articles.

3. A top case according to one of Claims 1 to 2, **characterised in that** the outer shell (17) for pivoting into the first opened position can be pivoted by at least 90°, especially approximately 180°, relative to the closed position.

4. A top case according to one of Claims 1 to 3, **characterised in that** the inner shell (16) in a second opened position can be pivoted by at least 90°, especially by 180°, relative to the closed position.

5. A top case according to one of Claims 1 to 4, **characterised in that** the inner shell (16) can be connected releasably to the outer shell (17) for jointly pivoting the inner shell (16) and the outer shell (17).

6. A top case according to Claim 5, **characterised in that** the releasable connection between the outer shell (17) and inner shell (16) comprises a releasable non-positive and/or positive connection arrangement, especially a latching connection or a magnetic connection.

7. A top case according to one of Claims 1 to 6, **characterised in that** the inner shell (16) and/or the outer shell (17) can be connected to the lower shell (13) by means of a lockable lock.

8. A top case according to one of Claims 1 to 7, **characterised in that** the inner shell (16) and/or the outer shell (17) in the closed position are connected by means of a sealing arrangement (20) to the lower shell (13) for sealing off the interior (15).

9. A top case according to one of Claims 1 to 8, **characterised in that** the outer shell (17) and the inner shell (16) each comprise their own articulation arrangement (22) for providing the first pivot axis.

10. A top case according to one of Claims 1 to 9, **characterised in that** the outer shell (17) comprises a holding device, especially an integrated holding device, for fastening articles in the outer shell (17).

11. A top case according to one of Claims 1 to 10, **characterised in that** the inner shell (16) and/or the outer shell (17) are each of single-walled or multi-walled construction.

12. A top case according to one of Claims 1 to 11, **characterised in that** at least the outer shell (17) is connected releasably to the lower shell and/or the inner shell (16).

13. A vehicle with a top case, **characterised in that** the top case (10) is configured according to one of Claims 1 to 12.

## Revendications

1. Topcase destiné à un véhicule, en particulier à une moto ou à un véhicule similaire à une moto comprenant une coque inférieure (13) et une coque supérieure (14) montée pivotante par rapport à la coque inférieure (13) pour permettre d'ouvrir le topcase (10), la coque inférieure (13) et la coque supérieure (14) définissant, en position fermée, un volume interne commun (15) permettant de stocker des objets, la coque supérieure (14) comprenant une coque interne (16) et une coque externe (17) entourant la coque interne (16), la coque externe (17) pouvant pivoter dans une première position ouverte indépendamment de la coque interne (16),
**caractérisé en ce que**
la coque externe (17) est reliée à la coque inférieure (13) en étant mobile en pivotement autour d'un premier axe de pivotement (18), et la coque interne (16) est également reliée à la coque inférieure (13) en étant mobile en pivotement autour du premier axe de pivotement (18).

2. Topcase conforme à la revendication 1,
**caractérisé en ce que**
la coque externe (17) comporte une cavité (19) qui est réalisée pour permettre la réception d'objets dans un premier état ouvert de la coque externe (17).

3. Topcase conforme à l'une des revendications 1 et 2,
**caractérisé en ce que**
pour permettre son pivotement dans la première position ouverte la coque externe (17) est mobile en pivotement d'au moins 90°, en particulier d'environ 180° par rapport à la position fermée.

4. Topcase conforme à l'une des revendications 1 à 3,
**caractérisé en ce que**
dans une seconde position ouverte, la coque interne (16) est mobile en pivotement d'au moins 90°, en particulier de 180° par rapport à la position fermée.

5. Topcase conforme à l'une des revendications 1 à 4,
**caractérisé en ce que**
la coque interne (16) peut être reliée de façon amovible à la coque externe (17) pour permettre un pivotement commun de la coque interne (16) et de la coque externe (17).

6. Topcase conforme à la revendication 5,
**caractérisé en ce que**
la liaison amovible entre la coque externe (17) et la coque interne (16) comporte un dispositif de liaison amovible par une liaison par la force ou par une liaison par la forme, en particulier une liaison par encliquetage ou une liaison magnétique.

7. Topcase conforme à l'une des revendications 1 à 6,
**caractérisé en ce que**
la coque interne (16) et/ou la coque externe (17) peu(vent) être reliée(s) à la coque inférieure (13) au moyen d'une serrure verrouillable.

8. Topcase conforme à l'une des revendications 1 à 7,
**caractérisé en ce que**
dans la position fermée la coque interne (16) et/ou la coque interne (17) est(sont) reliée(s) à la coque inférieure (13) au moyen d'un dispositif d'étanchéité (20) pour assurer l'étanchéité du volume interne (15).

9. Topcase conforme à l'une des revendications 1 à 8,
**caractérisé en ce que**
la coque externe (17) et la coque interne (16) comportent chacune un dispositif d'articulation propre (22) permettant de définir le premier axe de pivotement.

10. Topcase conforme à l'une des revendications 1 à 9,
**caractérisé en ce que**
la coque externe (17) comporte un dispositif de retenue, en particulier un dispositif de retenue intégré pour permettre de fixer des objets dans cette coque externe (17).

11. Topcase conforme à l'une des revendications 1 à 10,
**caractérisé en ce que**
la coque interne (16) et/ou la coque externe (17) comporte(nt) une ou plusieurs paroi(s).

12. Topcase conforme à l'une des revendications 1 à 11,
**caractérisé en ce qu'**
au moins la coque externe (17) est reliée de manière amovible avec la coque inférieure et/ou la coque interne (16).

13. Véhicule équipé d'un topcase **caractérisé en ce que** le topcase (10) est réalisé conformément à l'une des revendications 1 à 12.
